# EUROPÄISCHE PATENTANMELDUNG

(11) **EP 1 069 077 A1**
(43) Veröffentlichungstag der Anmeldung: **17.01.2001**
(21) Anmeldenummer: 00104783.6
(22) Anmeldetag: 06.03.2000
(51) Int. Cl.: C02F 1/00

(54) **Wasseraufbereitungsvorrichtung**

(30) Priorität: 15.07.1999 DE 19933204
(71) Anmelder: Meyer, Dieter, 31542 Bad Nenndorf (DE); Braun, Hans-Peter, 31535 Neustadt (DE)
(72) Erfinder: Meyer, Dieter, 31542 Bad Nenndorf (DE); Braun, Hans-Peter, 31535 Neustadt (DE); Meyer, Brigitte, 31542 Bad Nenndorf (DE); Braun, Evelyn, 31535 Neustadt (DE)
(74) Vertreter: Patentanwälte Thömen & Körner

(57) **Zusammenfassung**

Die Erfindung betrifft eine Wasseraufbereitungsvorrichtung, welche in einer Wasserleitung einfügbar oder an einer Wasserzapfstelle anschließbar ist. Die Wasseraufbereitungsvorrichtung besteht aus einem Gehäuse mit darin integrierten Behandlungsstufen, aus einer Einlaßvorrichtung für das unbehandelte Wasser und einer Auslaßvorrichtung für das behandelte Wasser. Erfindungsgemäß sind die Behandlungsstufen durch senkrecht im Gehäuse verlaufende Wände räumlich voneinander getrennt, wobei die Räume im unteren und oberen Bereich des Gehäuses so miteinander verbunden sind, daß sich ein röhrenartiges System bildet. Das durch die Einlaßvorrichtung strömende Wasser durchströmt alle Räume nacheinander und verläßt den letzten Raum durch die Auslaßvorrichtung.

## Beschreibung

Die Erfindung betrifft eine Wasseraufbereitungsvorrichtung nach dem Oberbegriff des Anspruchs 1.

Trinkwasser ist für den menschlichen Genuß geeignetes Wasser, dessen Qualität den geltenden gesetzlichen Bestimmungen und sonstigen einschlägigen Regeln nach DIN 2000 und DIN 2001 entspricht. Nach DIN 2000 sollen sich die Güteanforderungen an das Trinkwasser an den "Eigenschaften eines aus genügender Tiefe und aus ausreichend filtrierenden Schichten gewonnenen Grundwassers von einwandfreier Beschaffenheit, das dem natürlichen Wasserkreislauf entnommen und in keiner Weise beeinträchtigt wurde" orientieren. Dieses Wasser enthält bestimmte Mindestkonzentrationen an Calcium-, Magnesium- und Hydrogencarbonat-Ionen sowie wenig organische Verbindungen und relativ viel gelösten Sauerstoff.

Dementsprechend muß Trinkwasser frei sein von Krankheitserregern und darf keine gesundheitsschädigenden Eigenschaften haben. Es soll keimarm sein, appetitlich sein und zum Genuß anregen und es soll farblos, klar, kühl, geruchlos und geschmacklich einwandfrei sein. Der Gehalt an gelösten Stoffen soll sich in Grenzen halten. Wenn das Rohwasser diese Eigenschaften nicht aufweist, müssen sie ihm durch entsprechende Maßnahmen der Wasseraufbereitung verliehen werden.

Rohwasser, das diesem Ideal entspricht, steht für die Versorgung mit Trinkwasser nicht ausreichend zur Verfügung. Daher wird Rohwasser verwendet, das aus oberflächennahen Schichten oder aus Flüssen gewonnen wird, aber durch Schadstoffe belastet ist, die durch Regen, Abfalldeponien, Abwasser oder Düngemittel und Pestzide in der Landwirtschaft an die Umwelt abgegeben wurden.

Häufig ist das Rohwasser durch eine Kombination unterschiedlicher Schadstoffe belastet. Es ist dann erforderlich, auch unterschiedliche Behandlungsmethoden anzuwenden, um möglichst alle Schadstoffe zu entfernen. Wurde das Rohwasser bereits im Wasserwerk behandelt, können trotzdem Schadstoffe vorhanden sein, die die Trinkwasserqualität beeinflussen. Hierbei kann es sich um Schadstoffe handeln, die bei der Aufbereitung des Rohwassers im Wasserwerk anstelle der beseitigten Schadstoffe entstehen und in das gelieferte Wasser abgegeben werden, oder um Chlorgas, das zur Entkeimung und Sicherstellung der Keimfreiheit beim Transport im Leitungsnetz kontinuierlich oder in regelmäßigen Abständen zugesetzt wird. Teilweise fehlen dem Rohwasser aber auch Mineralien, so daß die Mindestkonzentrationen an Calcium-, Magnesium- und Hydrogencarbonat-Ionen nicht vorhanden ist. Diese Mineralien müssen dann ergänzt werden, damit das Wasser Trinkwasserqualität erhält.

Auch die verwendeten Materialien und der Zustand der Wasserleitungssysteme können die Trinkwasserqualität stark beeinflussen. Problematisch sind vor allem veraltete Bleirohre in der Installation privater Haushalte und im Wasserversorgungsnetz. Aber auch bei den heutzutage am meisten verwendeten Kupferrohrleitungen kann es zu Korrosionsvorgängen und einer Belastung des Trinkwassers kommen. Dieses geschieht dann, wenn Armaturen, Fittinge und Rohre aus einem anderen Metall mit den Kupferrohren zusammengeschlossen werden und sich sogenannte Lokalelemente bilden. Diese Lokalelemente bilden sich auch, wenn Kupferrohre mit Hilfe eines geschmolzenen Zusatzmetalls, das beispielsweise Cadmium als Legierungebestandteil enthält, gelötet werden. Weiterhin kann es bei Verwendung von verzinkten Eisenrohren unter bestimmten Bedingungen zur Korrosion und damit zur Abgabe von Zink-Ionen in gesundheitsschädlicher Konzentration kommen. Da das hochtoxisch Cadmium ein Begleitmetall von Zink ist, erhöht sich auch dessen Anteil im Trinkwasser. Ferner können Eisenspäne und -partikel in Kupferleitungen als auch in verzinkten Rohrleitungen zur sogenannten Lochkorrosion führen, wobei wiederum Schwermetalle freigesetzt werden. Schließlich ist grundsätzlich bei Rohrleitungen aus unedlen Legierungen eine erhöhte gesundheitsschädliche Schwermetallabgabe möglich.

Aus der DE 196 20 961 A1 ist eine Wasseraufbereitungsvorrichtung bekannt, die aus einem Gehäuse besteht, in dem kaskadiert angeordnete Behandlungsstufen untergebracht sind.

Die Behandlungsstufen umfassen wenigstens einen Verwirbler, ein Aktivkohlefilter, einen Ionenabsorber und -austauscher, einen Kapillarkörper sowie ein Mikropartikelfilter.

Im Gegensatz zu herkömmlichen Wasserfiltern hat diese Wasseraufbereitungsvorrichtung den Vorteil, eine breite Palette von Verunreinigungen zu entfernen.

Während herkömmliche Filter neben einzelnen Verunreinigungen größtenteils auch essentielle Mineralien und Spurenelemente beseitigen, ergänzt die Wasseraufbereitungsvorrichtung nach DE 196 20 961 A1 die Ionenbilanz des Wassers in sinnvoller Weise.

Der Erfindung liegt die Aufgabe zugrunde, eine Wasseraufbereitungsvorrichtung zu schaffen, die gegenüber herkömmlichen Wasseraufbereitungsvorrichtungen gleicher Abmessungen einen verbesserten Wirkungsgrad aufweist.

Diese Aufgabe wird mit den Merkmalen des Anspruchs 1 gelöst. Weiterbildungen und vorteilhafte Ausgestaltungen ergeben sich aus den Unteransprüchen.

Durch die erfindungsgemäße Anordnung der Behandlungsstufen im Gehäuse wird unter Ausnutzung des zur Verfügung stehenden Gehäuseinnenraums eine optimale Wasseraufbereitung erreicht.

Dabei sind die Behandlungsstufen durch senkrecht im Gehäuse verlaufende Wände räumlich voneinander getrennt, wobei die Räume im unteren und oberen Bereich des Gehäuses so miteinander verbunden sind, daß sich wenigstens ein röhrenartiges System bildet, bei dem das durch die Einlaßvorrichtung strömende Wasser alle Räume nacheinander durchströmt und den letzten Raum durch die Auslaßvorrichtung verläßt.

Dadurch wird erreicht, daß das zu behandelnde Wasser einen viel längeren Weg durch die einzelnen Behandlungsstufen zurücklegt als in herkömmlichen Wasseraufbereitungsvorrichtungen gleicher Abmessung.

Das zu behandelnde Wasser hat demnach eine längere Verweildauer in einzelnen Behandlungsstufen, so daß die Wirksamkeit der Behandlungen und damit die Aufbereitung des Wassers nachhaltig verbessert wird.

Je nach Art der Verunreinigung ist zum Entfernen dieser Verunreinigung eine bestimmte Verweilzeit in einer entsprechenden Behandlungsstufe nötig. Durch das röhrenartige System kann die nötige Verweilzeit auch bei größeren Durchflußmengen erreicht werden.

Durch die Anordnung mehrerer röhrenartiger Systeme nebeneinander im Gehäuse wird erreicht, daß die röhrenartigen Systeme parallel von dem zu behandelnden Wasser durchströmt werden.

Die Anzahl der nebeneinander angeordneten röhrenartigen Systeme bzw. die jeweilige Länge eines dieser röhrenartigen Systeme kann - abhängig vom Verunreinigungsgrad des zu behandelnden Wassers - individuell festgelegt werden.

Bei geringeren Verunreinigungsgraden des zu behandelnden Wassers reicht beispielsweise ein röhrenartiges System aus wenigen Behandlungsstufen aus, um eine optimale Reinigung des zu behandelnden Wassers zu erzielen, so daß mehrere dieser röhrenartigen Systeme nebeneinander im Gehäuse angeordnet werden können.

Das hat den Vorteil, daß die Durchflußmenge des zu behandelnden Wassers ohne Verlust der Reinigungsleistung der Wasseraufbereitungsvorrichtung erhöht werden kann.

Die überraschend gute Aufbereitung des zu behandelnden Wassers läßt sich auch damit erklären, daß das röhrenartige System mit einer Säule zu vergleichen ist, in der sich chromatographische Einflüsse, die unter anderem auf Adsorptions-, Verteilungs- oder Ionenaustausch-Vorgängen beruhen, bemerkbar machen.

Eine Weiterbildung sieht vor, daß der letzte vom Wasser durchströmte Raum allein oder zusammen mit der Auslaßvorrichtung ein tieferes Niveau im Gehäuse innehat als die übrigen Räume.

Dadurch wird erreicht, daß nach Beendigung des Wassereinlasses das Wasser aus dem röhrenartigen System über die Auslaßvorrichtung vollständig ausläuft.

Dieses hat den Vorteil, daß Wasser nicht über längere Zeit in der Aufbereitungsvorrichtung steht. Dadurch wird einer Keimvermehrung und mithin einer Verkeimung einzelner Behandlungsstufen entgegengewirkt.

Außerdem ist es möglich, daß die Behandlungsstufen senkrecht im Gehäuse verlaufende Röhren sind.

Durch die Verwendung von Röhren wird erreicht, daß die Wasseraufbereitungsvorrichtung individueller an die Art der Verunreinigung des zu behandelnden Wassers angepaßt werden kann.

Die Röhren lassen sich mit unterschiedlichsten Materialien zur Wasserbehandlung füllen.

Je nach Art der Wasserverunreinigung lassen sich Wasseraufbereitungsvorrichtungen herstellen, die sich durch eine geeignete Zusammenstellung der gefüllten Röhren auszeichnen.

Bei einem einheitlichen System, das mit Trennwänden ausgestattet ist, wäre eine solche individuelle Anpassung der Wasseraufbereitungsvorrichtung an die Art der Wasserverunreinigung zeitaufwendiger und damit kostenintensiver.

Ferner ist vorgesehen, daß die Röhren über im unteren und oberen Teil des Gehäuses angebrachte Steckverbindungen aneinander koppelbar sind.

Dadurch wird eine einfache Handhabung beim Zusammensetzen der Wasseraufbereitungsvorrichtung und beim Austausch einzelner inaktiver Behandlungsstufen erreicht.

Die individuelle Anpassung der Wasseraufbereitungsvorrichtung an die Art der Verunreinigung des zu behandelnden Wassers wird durch das Zusammenstecken der entsprechenden Behandlungsstufen außerordentlich vereinfacht.

Weiterhin ist es möglich, daß die Stirnseiten des Gehäuses abnehmbare Kappen darstellen, und daß die Behandlungsstufen in ihrer Gesamtheit oder einzeln aus dem Gehäuse herausnehmbar und austauschbar sind.

Dadurch kann jeder Nutzer der Aufbereitungsvorrichtung die verbrauchten Behandlungsstufen insgesamt oder einzeln bei Ablauf der Wirkungsdauer ohne großen Aufwand austauschen, regenerieren oder entsorgen.

Bei Verwendung von natürlichen Mineralien als Inhaltsstoffe der Behandlungsstufen können diese vorteilhaft als Biomüll oder Kompost entsorgt werden.

Des weiteren können die Behandlungsstufen im oberen Teil des Gehäuses durch Überströmöffnungen miteinander verbunden sein.

Die Überströmöffnungen legen den genauen Weg des zu behandelnden Wassers durch die Behandlungsstufen fest.

Eine Weiterbildung sieht vor, daß in den Behandlungsstufen verschiedene Inhaltsstoffe, insbesondere Aktivkohle, Zeolithe, Marmor, Dolomit, Magnesit und dergleichen, separat oder als Mischphasen einsetzbar sind, und daß die Behandlungsstufen je nach Wasserqualität in unterschiedlichen Kombinationen anwendbar sind.

Aktivkohle entfernt organische Inhaltsstoffe aus dem Wasser, indem sie diese an ihre große Oberfläche anlagert. Aktivkohle ist zur Entfernung vieler Schadstoffe aus dem Wasser gut geeignet. Sie hält neben Geruchs- und Geschmacksstoffen, chlorierte Kohlenwasserstoffe, eine Vielzahl Pestizide, Schwebstoffe und partikuläres Blei zurück. Auch Reste von Oxidationsmitteln wie Chlor und Ozon, die dem Wasser in Wasserwerken teilweise zugesetzt werden, lassen sich beseitigen.

Zeolithe ergänzt die Wirkung der Aktivkohle. Es handelt sich bei der Zeolithe um wasserhaltige Alumosilikate mit dreidimensionalen Gitterstrukturen, die die Eigenschaft besitzen, Ionen zu absorbieren und auszutauschen. Sie setzen dabei Ionen frei, die im Trinkwasser erwünscht sind.

Marmor, Dolomit und Magnesit sind natürlich vorkommende Mineralien, die neutralisierend auf saures Wasser wirken und durch Abgabe von Calcium- und Magnesium-Ionen den Mineralgehalt des zu behandelnden Wassers sinnvoll ergänzen.

In der erfindungsgemäßen Wasseraufbereitungsvorrichtung ist die Art der Behandlung abhängig von der Wasserverunreinigung frei wählbar. Die unterschiedlichsten Kombinationsmöglichkeiten führen zu einer optimalen Aufbereitung des zu behandelnden Wassers.

Eine vorteilhafte Ausgestaltung der Erfindung sieht vor, daß in wenigstens einer Behandlungsstufe wenigstens ein Inhaltsstoff einsetzbar ist, der ganz oder teilweise mit Silber und/oder Silberverbindungen imprägniert ist.

Dadurch ist es möglich, Mikroorganismen wie Schimmelpilze, Algen und Bakterien abzutöten bzw. in ihrem Wachstum zu hemmen. Es erfolgt keine Verkeimung der Wasseraufbereitungsvorrichtung. Somit wird verhindert, daß die Wasseraufbereitungsvorrichtung verstopft und der für die Wasseraufbereitung notwendige direkte Kontakt zwischen Rohwasser und Inhaltsstoffen der Behandlungsstufen verloren geht.

Eine ähnliche Wirkung wird erreicht, wenn wenigstens eine Behandlungsstufe elementares Silber, insbesondere in Form von Silberfäden, Silberfolien und/oder Silbergaze, separat oder zusammen mit anderen Inhaltsstoffen enthält.

Weiterhin ist vorgesehen, daß an der Einlaßvorrichtung eine Reduzierdüse angebracht ist.

Die Reduzierdüse legt entsprechend dem Verunreinigungsgrad des zu behandelnden Wassers die Durchflußmenge pro Zeiteinheit fest. Die Durchflußmenge wird dabei durch den Durchmesser der Düse vorgegeben.

Eine Weiterbildung sieht vor, daß an der Einlaßvorrichtung mindestens ein Mikrofilter, der sich austauschen läßt, angebracht ist.

Der Mikrofilter hat die Aufgabe, das durch die Einlaßvorrichtung einströmende Wasser von Partikeln und Schwebstoffen zu befreien. Beim Einsatz von sehr feinen Mikrofiltern lassen sich auch Keime entfernen.

Der Filter verhindert außerdem, daß die Behandlungsstufen durch Partikel und Schwebstoffe verstopft werden, wodurch ein schlechter Durchfluß entstehen würde.

Sinnvollerweise wird ein System aus Mikrofiltern verwendet, bei denen sich die Porengröße in Richtung Auslaß stufenweise verkleinert, so daß ein zu schnelles Zusetzen des Mikrofilters verhindert wird.

Besonders vorteilhaft ist ein System aus drei Mikrofiltern mit einer Porengröße von 50 µm, 25 µm und 5 µm oder 40 µm, 10 µm und 5 µm.

Sollte sich die Durchflußmenge bei Verwendung eines Mikrofilters ändern, weil dieser sich zugesetzt hat, so läßt er sich einfach austauschen.

Ferner ist es möglich, daß an der Auslaßvorrichtung mindestens ein Mikrofilter angebracht ist, der sich austauschen läßt.

Hierdurch wird ebenfalls ein Entfernen von Partikeln, Schwebstoffen oder Keimen erreicht.

Dementsprechend kann auch ein System aus Mikrofiltern verwendet werden, bei denen sich die Porengröße in Richtung Auslaß stufenweise verkleinert, beispielsweise von 50 µm, 25 µm und 5 µm oder 40 µm, 10 µm und 5 µm.

Außerdem ist vorgesehen, daß der Mikrofilter ein Adsorptionsfilter ist, der eine dreidimensionale vernetzte Struktur besitzt. Vorteilhaft ist als Adsorptionsfilter gesinterte Aktivkohle einsetzbar.

Dadurch wird erreicht, daß insbesondere Keime aus dem zu behandelnden Wasser gefiltert werden. Die dreidimensionale vernetzte Struktur der Adsorptionsfilter ist dafür verantwortlich, daß die Keime adsorbiert werden. Ähnlich der Funktion eines Schwammes werden die Keime vom Adsorptionsfilter gewissermaßen aufgesaugt.

Gegenüber Filtern, die eine siebartige Struktur besitzen, können hierdurch verschiedene Keimarten unterschiedlichster Form und Größe herausgefiltert werden. Gerade auch stabförmige Keime, die den siebartigen Filtern entrinnen, werden in den Adsorptionsfiltern sehr leicht zurückgehalten, da sie sich in der netzartigen dreidimensionalen Struktur sozusagen verfangen.

Des weiteren kann der Mikrofilter ein Membranfilter sein, der eine Porengröße von kleiner 3 µm besitzt.

Der Membranfilter funktioniert ebenfalls wie ein Netz und hält Keime durch seine geringe Porengröße zurück. Als Material für Membranfilter eignen sich besonders Celluloseester wie Cellulosenitrat oder Celluloseacetat, aber auch Polycarbonat.

Im übrigen besteht die Möglichkeit, daß an der Auslaßvorrichtung ein Perlator angebracht ist.

Dadurch wird Luftsauerstoff in das zu behandelnde Wasser eingetragen.

Zudem kann zur Entfernung von ferromagnetischen Teilchen ein Magnet unterhalb der Einlaßvorrichtung angebracht sein.

Außerdem ist vorgesehen, daß das Gehäuse und/oder die Trennwände bzw. die Röhren ganz oder teilweise aus einem transparenten Material bestehen.

Dadurch ist es möglich, abhängig von der verwendeten Behandlungsstufe, das Ende der Wirkungsdauer visuell festzustellen.

Dieses hat den Vorteil, daß keine komplizierten Rechnungen zur Durchflußmenge, Filterleistung und zum Verunreinigungsgrad des zu behandelnden Wassers angestellt werden müssen, um das Ende der Wirkungsdauer feststellen zu können.

Nachfolgend wird die Erfindung anhand eines Ausführungsbeispiels erläutert, das in der Zeichnung dargestellt ist. In dieser zeigen:
- Fig. 1: eine schematische Darstellung der Behandlungsstufen der erfindungsgemäßen Wasseraufbereitungsvorrichtung im Längsschnitt,
- Fig. 2: eine schematische Darstellung weiterer Aufbereitungsstufen der erfindungsgemäßen Wasseraufbereitungsvorrichtung im Längsschnitt und
- Fig. 3: eine schematische Darstellung der Wasserströmung durch die einzelnen Behandlungsstufen der erfindungsgemäßen Wasseraufbereitungsvorrichtung im Querschnitt.

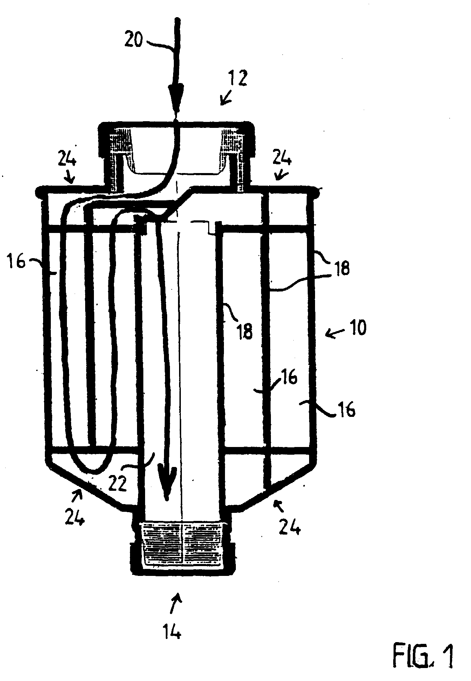

Die in Fig. 1 dargestellte Wasseraufbereitungsvorrichtung besteht aus einem Gehäuse 10, aus einer Einlaßvorrichtung 12 und einer Auslaßvorrichtung 14. Im Inneren des Gehäuses 10 sind mehrere Behandlungsstufen 16, 22 angeordnet, die durch senkrecht im Gehäuse 10 verlaufende Wände 18 räumlich voneinander getrennt sind. Die Behandlungsstufen, beziehungsweise die Räume 16, 22 sind im oberen und unteren Teil des Gehäuses 10 so miteinander verbunden, daß sich ein röhrenartiges System bildet, in dem das durch die Einlaßvorrichtung 12 strömende Wasser 20 alle Räume 16 nacheinander durchströmt und den letzten Raum 22 durch die Auslaßvorrichtung 14 verläßt. Der Übersicht halber wird in Fig. 1 das Durchströmen der Kammern nur anhand von drei Kammern dargestellt.

Das Gehäuse 10 kann an seinen Stirnseiten über abnehmbare Kappen 24 geöffnet werden, um die Behandlungsstufen 16, 22 einzeln oder als gesamtes System auszutauschen.

Die einzelnen Behandlungsstufen 16, 22 sind mit unterschiedlichsten Materialien, insbesondere Aktivkohle, Zeolithe, Marmor, Dolomit und Magnesit, separat oder als Mischphase gefüllt und werden so aneinandergereiht, daß der bestmögliche Effekt in der Aufbereitung in Abhängigkeit von der Art der Wasserverunreinigung erzielt wird.

Damit einer Keimvermehrung in der Wasseraufbereitungsvorrichtung entgegengewirkt wird, ist die Wasseraufbereitungsvorrichtung so konstruiert, daß der letzte Raum 22, der von dem zu behandelndem Wasser durchströmt wird, ein tieferes Niveau im Gehäuse 10 innehat als die übrigen Räume 16.

Nach Beendigung des Wassereinlasses wird dadurch das vollständige Trockenlaufen der Vorrichtung erreicht. Das Wasser bleibt daher nicht in der Wasseraufbereitungsvorrichtung stehen und bildet somit kein Nährmedium für Mikroorganismen. Außerdem wird dadurch ein aufgrund einer Verkeimung des Auslaufes mögliches Eindringen von Mikroorganismen in die letzte Behandlungsstufe verhindert.

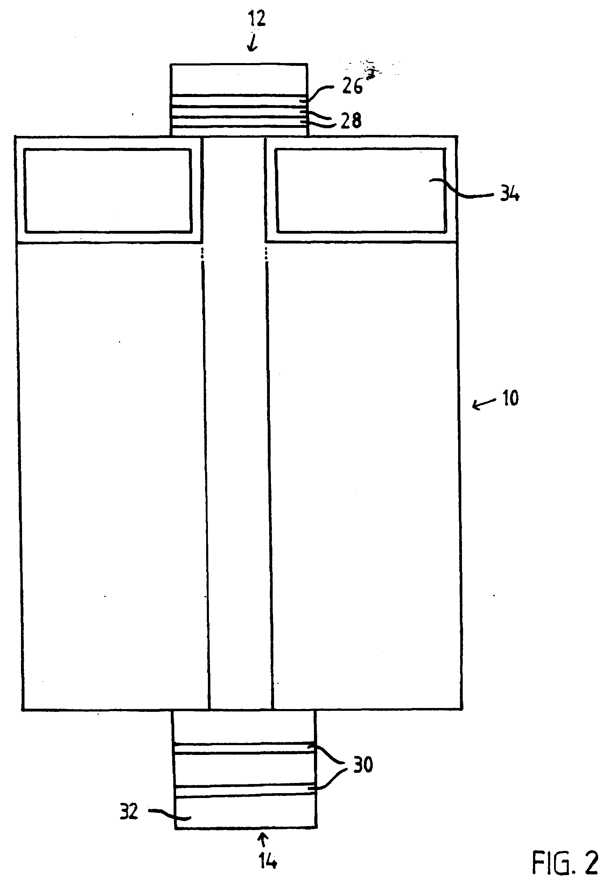

Die in Fig. 2 dargestellte Wasseraufbereitungsvorrichtung besteht aus einem Gehäuse 10, aus einer Einlaßvorrichtung 12 und einer Auslaßvorrichtung 14. Unterhalb der Einlaßvorrichtung 12 befindet sich ein Magnet 34. In der Einlaßvorrichtung 12 sind eine Reduzierdüse 26 und mehrere Mikrofilter 28 integriert. In der Auslaßvorrichtung 14 sind ebenfalls Mikrofilter 30 sowie ein Perlator 32 angebracht.

Auf die Darstellung der in Fig. 1 abgebildeten Behandlungsstufen wird der Übersicht halber verzichtet.

Die in der Einlaßvorrichtung 12 integrierte Reduzierdüse 26 dient dazu, die durch die Wasseraufbereitungsvorrichtung strömende Menge an Wasser in Abhängigkeit vom Verunreinigungsgrad des zu behandelnden Wassers zu begrenzen. Je größer die Verunreinigung, desto kleiner wird die Durchflußmenge des Wasser gewählt.

Die in der Einlaßvorrichtung 12 integrierten Mikrofilter 28 filtern Partikel, Schwebstoffe und Keime aus dem Wasser heraus.

Dieselbe Aufgabe erfüllen die in der Auslaßvorrichtung 14 integrierten Mikrofilter 30.

Der in der Auslaßvorrichtung 14 integrierte Perlator 32 sorgt für einen Sauerstoffeintrag in das behandelte Wasser und steigert somit die Trinkwasserqualität.

Ferner dient ein Magnet 34, der unterhalb der Einlaßvorrichtung 12 im Gehäuse 10 angebracht ist, dazu, ferromagnetische Partikel aus dem zu behandelndem Wasser zu entfernen.

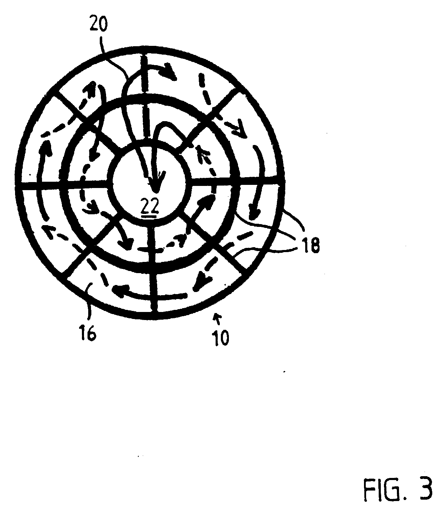

Fig. 3 zeigt schematisch den Weg des zu behandelnden Wassers durch die Behandlungsstufen 16, 22 der erfindungsgemäßen Wasseraufbereitungsvorrichtung.

Innerhalb des Gehäuses 10 befinden sich mehrere Behandlungsstufen 16, 22, die durch senkrecht im Gehäuse 10 verlaufende Wände 18 räumlich voneinander getrennt sind. Die dargestellten Pfeile kennzeichnen das durch die Behandlungsstufen strömende Wasser. Dabei charakterisieren die durchgezogenen Pfeile das im oberen Bereich des Gehäuses 10 strömende Wasser, die gestrichelten Pfeile dagegen das im unteren Bereich des Gehäuses 10 strömende Wasser.

Das durch die Einlaßvorrichtung 12 fließende Wasser 22 durchströmt die Räume 16 im Sinne der Pfeilrichtung und verläßt dann den letzten Raum 22 aber die Auslaßvorrichtung 14.

## Patentansprüche

1. Wasseraufbereitungsvorrichtung, welche in eine Wasserleitung einfügbar oder an einer Wasserzapfstelle anschließbar ist, bestehend aus in einem Gehäuse (10) kaskadiert angeordneten Behandlungsstufen (16;22), aus einer Einlaßvorrichtung (12) für das unbehandelte Wasser und einer Auslaßvorrichtung (14) für das behandelte Wasser, dadurch gekennzeichnet, daß die Behandlungsstufen (16;22) durch senkrecht im Gehäuse (10) verlaufende Wände (18) räumlich voneinander getrennt sind, wobei die Räume (16;22) im unteren und oberen Bereich des Gehäuses (10) so miteinander verbunden sind, daß sich wenigstens ein röhrenartiges System bildet, bei dem das durch die Einlaßvorrichtung (12) strömende Wasser (20) alle Räume (16;22) nacheinander durchströmt und den letzten Raum (22) durch die Auslaßvorrichtung (14) verläßt.

2. Wasseraufbereitungsvorrichtung nach Anspruch 1, dadurch gekennzeichnet, daß der letzte vom Wasser durchströmte Raum (22) separat oder zusammen mit der Auslaßvorrichtung (14) ein tieferes Niveau im Gehäuse (10) innehat als die übrigen Räume (16).

3. Wasseraufbereitungsvorrichtung nach Anspruch 1 oder 2, dadurch gekennzeichnet, daß die Behandlungstufen (16;22) senkrecht im Gehäuse (10) verlaufende Röhren sind.

4. Wasseraufbereitungsvorrichtung nach Anspruch 3, dadurch gekennzeichnet, daß die Röhren über im unteren und oberen Teil des Gehäuses (10) angebrachte Steckverbindungen aneinander koppelbar sind.

5. Wasseraufbereitungsvorrichtung nach einem der Ansprüche 1 bis 4, dadurch gekennzeichnet, daß die Stirnseiten des Gehäuses (10) abnehmbare Kappen (24) sind, und die Behandlungsstufen (16;22) insgesamt oder einzeln aus dem Gehäuse (10) herausnehmbar und austauschbar sind.

6. Wasseraufbereitungsvorrichtung nach einem der Ansprüche 1 bis 5, dadurch gekennzeichnet, daß die Behandlungsstufen (16;22) im oberen Teil des Gehäuses (10) durch Überströmöffnungen miteinander verbunden sind.

7. Wasseraufbereitungsvorrichtung nach einem der Ansprüche 1 bis 6, dadurch gekennzeichnet, daß in den Behandlungsstufen (16;22) verschiedene Inhaltsstoffe, insbesondere Aktivkohle, Zeolithe, Marmor, Dolomit, Magnesit etc., separat oder als Mischphase einsetzbar sind, und daß die einzelnen mit Material gefüllten Behandlungsstufen (16;22) je nach Wasserqualität in unterschiedlichen Kombinationen anwendbar sind. -

8. Wasseraufbereitungsvorrichtung nach einem der Ansprüche 1 bis 7, dadurch gekennzeichnet, daß in wenigstens einer Behandlungsstufe wenigstens ein Inhaltsstoff einsetzbar ist, der ganz oder teilweise mit Silber und/oder Silberverbindungen imprägniert ist.

9. Wasseraufbereitungsvorrichtung nach einem der Ansprüche 1 bis 8, dadurch gekennzeichnet, daß in wenigstens einer Behandlungsstufe elementares Silber, insbesondere in Form von Silberfäden, Silberfolien und/oder Silbergaze, separat oder zusammen mit anderen Inhaltsstoffen einsetzbar ist.

10. Wasseraufbereitungsvorrichtung nach einem der Ansprüche 1 bis 9, dadurch gekennzeichnet, daß an der Einlaßvorrichtung (12) eine Reduzierdüse (26) angebracht ist.

11. Wasseraufbereitungsvorrichtung nach einem der Ansprüche 1 bis 10, dadurch gekennzeichnet, daß an der Einlaßvorrichtung (12) mindestens ein Mikrofilter (28) angebracht ist, der sich austauschen läßt.

12. Wasseraufbereitungsvorrichtung nach einem der Ansprüche 1 bis 11, dadurch gekennzeichnet, daß an der Auslaßvorrichtung (14) mindestens ein Mikrofilter (30) angebracht ist, der sich austauschen läßt.

13. Wasseraufbereitungsvorrichtung nach Anspruch 11 oder 12, dadurch gekennzeichnet, daß ein in der Einlaßvorrichtung (12) und/oder der Auslaßvorrichtung (14) ein System aus Mikrofiltern (28, 30) einsetzbar ist, bei denen sich die Porengröße in Richtung Auslaß stufenweise verkleinert.

14. Wasseraufbereitungsvorrichtung nach Anspruch 13, dadurch gekennzeichnet, daß bei Einsatz eines Systems aus drei Mikrofiltern die Porendurchmesser 50 µm, 25 µm und 5µm oder 40µm, 10 µm und 5 µm betragen.

15. Wasseraufbereitungsvorrichtung nach einem der Ansprüche 11 bis 14, dadurch gekennzeichnet, daß der Mikrofilter (28, 30) ein Adsorptionsfilter ist, der eine dreidimensionale vernetzte Struktur besitzt.

16. Wasseraufbereitungsvorrichtung nach Anspruch 15, dadurch gekennzeichnet, daß als Adsorptionsfilter gesinterte Aktivkohle einsetzbar ist.

17. Wasseraufbereitungsvorrichtung nach einem der Ansprüche 11 bis 14, dadurch gekennzeichnet, daß der Mikrofilter (28, 30) ein Membranfilter ist, der eine Porengröße von kleiner 3 µm besitzt.

18. Wasseraufbereitungsvorrichtung nach einem der Ansprüche 1 bis 17, dadurch gekennzeichnet, daß an der Auslaßvorrichtung (14) ein Perlator (32) angebracht ist.

19. Wasseraufbereitungsvorrichtung nach einem der Ansprüche 1 bis 18, dadurch gekennzeichnet, daß unterhalb der Einlaßvorrichtung (12) ein Magnet (34) angebracht ist.

20. Wasseraufbereitungsvorrichtung nach einem der Ansprüche 1 bis 19, dadurch gekennzeichnet, daß das Gehäuse (10) und/oder die Trennwände (18) bzw. die Röhren aus einem transparenten Material bestehen.
